# EUROPÄISCHE PATENTANMELDUNG

(11) **EP 0 975 140 A1**
(43) Veröffentlichungstag der Anmeldung: **26.01.2000**
(21) Anmeldenummer: 98113545.2
(22) Anmeldetag: 21.07.1998
(51) Int. Cl.: H04N 1/10, H04N 1/12, H04N 1/21

(54) **Visitenkarten-Organizer**

(71) Anmelder: Tenné, Jaakov, 70619 Stuttgart (DE)
(72) Erfinder: Tenné, Jaakov, 70619 Stuttgart (DE)
(74) Vertreter: KOHLER SCHMID + PARTNER

(57) **Zusammenfassung**

Um einem Benutzer den Umgang mit den ihm übergebenen Visitenkarten zu erleichtern und insbesondere den Zugriff auf Visitenkarten und deren Verwaltung zu vereinfachen, wird ein tragbarer Visitenkarten-Organizer (10) vorgeschlagen, der eine optische Abtasteinrichtung (15) für eine Visitenkarte, einen Visitenkarten-Datenspeicher für die beim Abtasten gewonnenen Daten der Visitenkarte und eine mit dem Visitenkarten-Datenspeicher in Informationsverbindung stehende Anzeige (Anzeigendisplay 16) zur optischen Wiedergabe von den im Visitenkarten-Datenspeicher gespeicherten Visitenkarten aufweist. Eine Visitenkarte wird mit der optischen Abtasteinrichtung (Scanner) abgetastet und als Datensatz im Visitenkarten-Datenspeicher abgelegt.

## Beschreibung

Zur Aufbewahrung von überreichten Visitenkarten sind Visitenkarten-Ringbücher und -Alben mit transparenten Hüllen zur Einlage von Visitenkarten bekannt. Meist ist auch noch ein alphabetisches Register vorgesehen, das dem Benutzer das Einordnen und Auffinden von Visitenkarten erleichtert. Typische Größen dieser Ringbücher und Alben betragen bei einspaltiger Anordnung der Hüllen ca. 115 mm x 250 mm oder bei doppelspaltiger Anordnung ca. 270 mm x 315 mm. Auch Visitenkartenboxen sind bekannt, in die sich Visitenkarten wie Karteikarten einordnen lassen.

Weiterhin ist ein sogenannter Bussines-Card-Scanner der Fa. Seiko Instruments bekannt, mit dem Visitenkarten optisch abgetastet (gescannt) werden und die dabei gewonnenen Daten an einen Computer (PC) zur Weiterverarbeitung in einer Adreßdatenbank weitergeleitet werden. Im Gegensatz zu den Ringbüchern und Alben werden die Visitenkarten nicht gegenständlich aufbewahrt, sondern als Adreßdatensatz (Name, Adresse, Telefonnummer etc.) in den hierfür vorgesehenen Datenfeldern der Adreßdatenbank des Computers gespeichert. Allerdings müssen die überreichten Visitenkarten vom Benutzer zunächst so lange gesammelt werden, bis sie am Standort des Computers in diesen eingegeben werden können. Auch der Zugriff auf die im Computer gespeicherten Datensätze ist ebenfalls nur am Standort des Computers möglich.

Es ist daher die Aufgabe der vorliegenden Erfindung, einem Benutzer den Umgang mit den ihm übergebenen Visitenkarten zu erleichtern und insbesondere den Zugriff auf Visitenkarten und deren Verwaltung zu vereinfachen.

Diese Aufgabe wird erfindungsgemäß gelöst durch einen tragbaren Visitenkarten-Organizer mit einer optischen Abtasteinrichtung für eine Visitenkarte, mit einem Visitenkarten-Datenspeicher für die beim Abtasten gewonnenen Daten der Visitenkarte und mit einer mit dem Visitenkarten-Datenspeicher in Informationsverbindung stehenden Anzeige zur optischen Wiedergabe von den im Visitenkarten-Datenspeicher gespeicherten Visitenkarten.

Mit dem erfindungsgemäßen Visitenkarten-Organizer wird ein elektronisches Taschen-Gerät zur Abtastung, Speicherung und Verwaltung von Visitenkarten bereitgestellt. Eine Visitenkarte wird mit der optischen Abtasteinrichtung (Scanner) abgetastet und als Datensatz im Visitenkarten-Datenspeicher abgelegt. Bei einer Auflösung von beispielsweise 270 x 160 Pixel und einer Farbtiefe von einem Bit (monochrom) sind zur Speicherung einer Visitenkarte 5,27 KBytes erforderlich. Bei einem Datenspeicher mit 2 MBytes können so ca. 380 Visitenkarten abgelegt werden. Durch den Einsatz von Kompressionsalgorithmen sollte sich die Datenmenge noch um mindestens einen Faktor 5 reduziert lassen, so daß mindestens ca. 1900 Visitenkarten abspeichert werden können. Die so gespeicherten Visitenkarten lassen sich dann auf der möglichst flächenfüllenden Anzeige (Anzeigendisplay) monochrom oder farbig wiedergeben. Es versteht sich, daß zur Abtastung sowie zur Verwaltung, Sortierung, Auswahl und Wiedergabe der gespeicherten Visitenkarten eine entsprechende Software vorgesehen ist.

Bei einer Ausführungsform der Erfindung ist die optische Abtasteinrichtung als Abtastzeile (Zeilenscanner) ausgebildet, quer zu der die abzutastende Visitenkarte relativverschiebbar ist. Eine solche Abtastzeile ist üblicherweise durch einen Zeilenleser mit einer Auflösung von z.B. 160 Bildpunkten bei einem Bit Farbe und durch eine LED-Leuchtquelle gebildet. In einer Weiterbildung dieser Ausführungsform kann ein ausziehbarer Schlitten vorgesehen sein, auf dem aufliegend die abzutastende Visitenkarte an der optischen Abtasteinrichtung vorbeibewegt wird.

In einer anderen Ausführungsform kann die optische Abtasteinrichtung eine den typischen Abmessungen von Visitenkarten entsprechende, maximal 11,5 cm x maximal 8,5 cm, vorzugsweise eine maximal 10,0 cm x maximal 7,0 cm große Abtastfläche aufweisen, auf der aufliegend eine Visitenkarte großflächig abgetastet wird.

Um die Abstastung mit der Vorbeibewegung der Visitenkarte zu synchronisieren oder um die abzutastende Visitenkarte in ihre Abtastposition in den Visitenkarten-Organizer zu transportieren, können Antriebsmittel wie z.B. Transportrollen vorgesehen sein.

Bei besonders bevorzugten Ausführungsformen der Erfindung ist eine Bedienungseinrichtung vorgesehen, mittels der zumindest der optische Abtastungsablauf und/oder ein Informationsaustausch mit dem Visitenkarten-Datenspeicher steuerbar ist bzw. sind. Diese Bedienungseinrichtung kann z.B. durch einen Trackball oder ein Touch-Pad (Finger-Steuerfeld), mit dem eine Funktion (Eingabe, Suche, Wiedergabe einer Visitenkarte, ...) in einem auf der Anzeige angezeigten Menü ausgewählt wird, und durch einen Taster gebildet sein, mit dem diese ausgewählte Funktion ausgelöst wird. Die gesamte Benutzerführung kann über die Anzeige visualisiert werden.

Um Daten aus dem Visitenkarten-Datenspeicher z.B. in einen PC (Notebook) einzulesen oder an einen Drucker zu senden, ist eine mit dem Visitenkarten-Datenspeicher in Informationsverbindung stehende, von außen zugängliche Schnittstelle, z.B. eine Infrarot-Schnittstelle vorgesehen. Gleichzeitig kann diese Schnittstelle zum Datenaustausch mit baugleichen Geräten oder zur Aktualisierung der Software des Visitenkarten-Organizers genutzt werden.

Vorzugsweise sind die im Visitenkarten-Datenspeicher gespeicherten Visitenkarten auf der Anzeige, insbesondere über die oben genannte Bedienungseinrichtung, durchblätterbar.

Die Abmessungen des erfindungsgemäßen Visitenkarten-Organizers betragen maximal 13,5 cm x maximal 10,5 cm, vorzugsweise maximal 12,0 cm x maximal 9,0 cm. In bevorzugten Ausführungsformen hat der Organizer etwa die Größe einer Zigarettenschachtel, so daß etwa scheckkartengroße Visitenkarten (ca. 8,5 cm x 5,5 cm) abgetastet werden können.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine erste Ausführungsform des erfindungsgemäßen Visitenkarten-Organizers, bei dem die abzutastende Visitenkarte auf einem beweglichen Schlitten aufliegend abgetastet wird;
- Fig. 2: eine zweite Ausführungsform des erfindungsgemäßen Visitenkarten-Organizers mit einem die abzutastende Visitenkarte transportierenden Antrieb; und
- Fig. 3: eine dritte Ausführungsform des erfindungsgemäßen Visitenkarten-Organizers mit einer etwa visitenkartengroßen Abtastfläche.

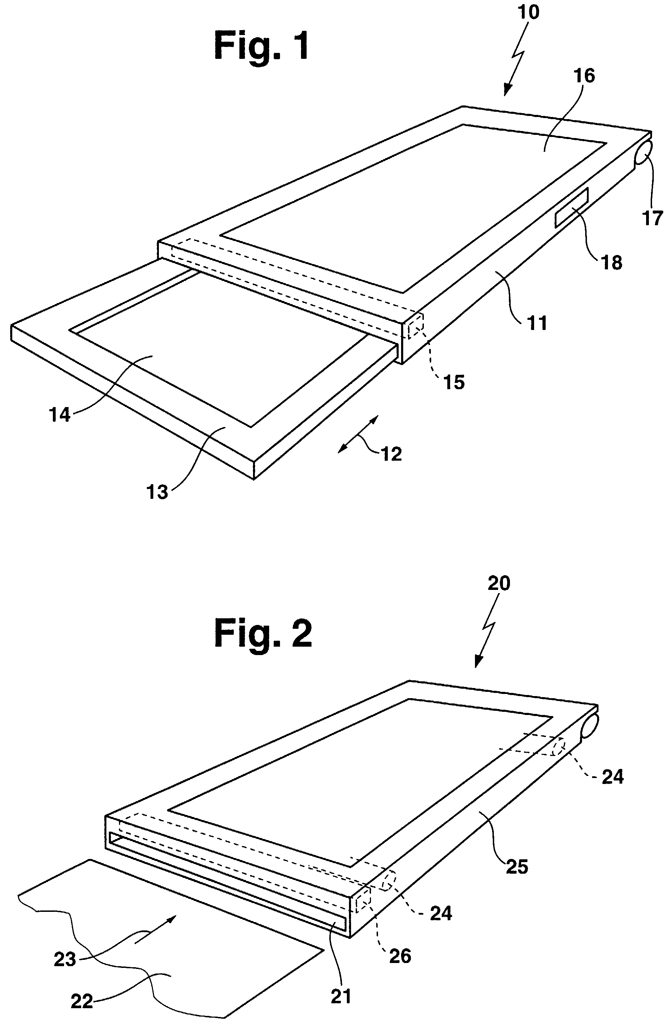

Der in Fig. 1 dargestellte Visitenkarten-Organizer **10** weist ein etwa zigarettenschachtelgroßes Gehäuse **11** auf, das aus zwei miteinander verschraubten Hartkunststoffschalen hergestellt ist. An einer Stirnseite des Gehäuses 11 ist in Bodenhöhe ein in Pfeilrichtung **12** verschiebbarer Schlitten **13** mit einem nach oben offenen Kartenfach **14** vorgesehen, in das eine Visitenkarte eingelegt werden kann. Wird der ausgezogene Schlitten 13 in das Gehäuse 11 zurückgeschoben, so wird die eingelegte Visitenkarte an einer optischen Abtasteinrichtung **15** (Zeilenscanner) vorbeigeführt, welche die gesamte Oberseite der Visitenkarte abtastet. Die so gewonnenen Informationen werden in einem Visitenkarten-Datenspeicher des Organizers 10 ablegt.

Auf der Oberseite des Gehäuses 11 befindet sich ein nahezu flächenfüllendes Anzeigendisplay **16**, auf dem die gespeicherten Visitenkarten angezeigt sowie Menü-Funktionen ausgewählt werden können. Dazu ist an der hinteren rechten Ecke des Gehäuses 11 eine frei drehbare Trackball-Kugel **17** gelagert, mittels der die gewünschte Menü-Funktion auf dem Anzeigendisplay 16 ausgewählt bzw. durch die angezeigten Visitenkarten geblättert werden kann. Durch Druck auf die Trackball-Kugel 17 wird die ausgewählte Funktion ausgelöst. Über diese Menü-Funktionen erfolgt die gesamte Benutzerführung. Am hinteren Gehäuserand befinden sich noch zwei Schalter (nicht gezeigt) zum Ein- bzw. Ausschalten des Organizers 10 und zum Aktivieren der Hintergrundbeleuchtung des Anzeigendisplays 16. Auf der nicht gezeigten Unterseite sind ein Batteriefach sowie ein Resetschalter zur Initialisierung der Organizer-Software vorgesehen. Weiterhin ist seitlich am Gehäuse 11 noch eine Infrarot-Schnittstelle **18** vorgesehen, um Daten aus dem Visitenkarten-Datenspeicher z.B. in einen PC (Notebook) einzulesen oder an einen Drucker zu senden.

Um eine neue Visitenkarte abzutasten, wird der Schlitten 13 herausgezogen, wodurch ein Abtastmenü auf dem Anzeigendisplay 16 erscheint. Nach Einlegen der Visitenkarte wird der Abtastvorgang durch Drücken auf die Trackball-Kugel 17 aktiviert und der Schlitten 13 manuell ins Gehäuse 11 zurückgeschoben, wobei die Visitenkarte abgetastet wird. Die Synchronisation der optischen Abtasteinrichtung 15 mit der Bewegung des Schlittens 13 kann z.B. durch ein Potentiometer erfolgen, das durch eine Zahnspindel, welche mit dem Schlitten 13 läuft, angetrieben wird. Mit einem Optokoppler (Lichtschranke) können Anfangs- und Endpunkte des Schlittens 13 überwacht werden. Der Abtastvorgang kann so oft wiederholt werden, bis der Visitenkarten-Datenspeicher voll ist. Die abgetastete Visitenkarte kann unter einem Namen, z.B. dem Firmennamen, abgespeichert werden, wobei diese Eingabe durch Auswahl des Buchstabens auf dem Anzeigendisplay 16 über die Trackball-Kugel 17 erfolgt. Optional kann danach auch die Rückseite der Visitenkarte abgetastet werden, die dann als zweite Seite der Visitenkarte abgelegt wird. Diese Funktion kann auch dazu verwendet werden, um zwei Visitenkarten unter dem gleichen Namen abzuspeichern.

Nach dem Einschalten des Gerätes wechselt dies automatisch in einen Suchmodus, sofern im Setup nichts anderes eingestellt ist. Hier kann der Benutzer entweder durch alle Visitenkarten blättern oder durch Auswahl eines oder mehrerer Anfangsbuchstaben die Auswahl einschränken und danach blättern. Bei der Anzeige einer Visitenkarte wird am unteren Rand des Anzeigendisplays 16 ein Kontextmenü eingeblendet, das es dem Benutzer erlaubt, neu zu suchen, eine neue Visitenkarte abzutasten, die Daten der Visitenkarte zu ändern oder die Visitenkarte zu löschen. Alle Funktionen werden durch die Trackball-Kugel 17 ausgewählt und ausgelöst. Die für diese Benutzerführung erforderliche Software ist in einem eigenen Arbeitsspeicher des Organizers 10 abgelegt.

Bei der in Fig. 2 gezeigten Ausführungsform weist der Organizer **20** einen Einführschlitz **21** auf, in den die abzutastende Visitenkarte **22** vom Benutzer in Pfeilrichtung **23** eingeführt wird. Transportrollen **24** im Bereich des Einführschlitzes 21 und eines Austrittsschlitzes am gegenüberliegenden Ende des Gehäuses **25** transportieren die Visitenkarte an der zeilenförmigen optischen Abtasteinrichtung **26** vorbei, wobei der Transport synchron zur Abtastung erfolgt.

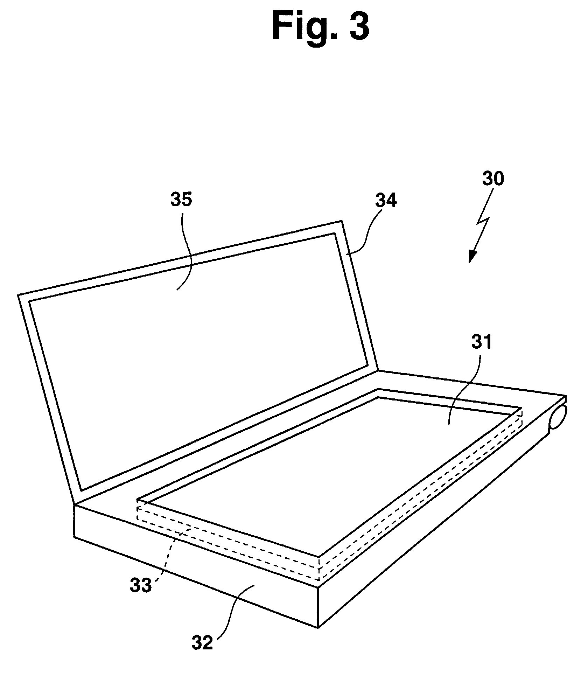

In Fig. 3 ist noch eine weitere Ausführungsform eines Organizers **30** gezeigt, bei dem die abzutastende Visitenkarte in ein Kartenfach **31** in der Oberseite des Gehäuses **32** eingelegt wird. Der Boden des Kartenfaches 31 ist durch eine als Flachbett-Scanner ausgestaltete optische Abtasteinrichtung **33** gebildet, mit der die Visistenkarte, ohne selbst bewegt zu werden, abgetastet wird. Während des Abtastvorgangs ist die Visitenkarte im Kartenfach 31 über einen Klappdeckel **34** fixiert, in dessen Innenseite der Anzeigendisplay **35** integriert ist.

## Patentansprüche

1. Tragbarer Visitenkarten-Organizer (10; 20; 30) mit einer optischen Abtasteinrichtung (15; 26; 33) für eine Visitenkarte (22),
mit einem Visitenkarten-Datenspeicher für die beim Abtasten gewonnenen Daten der Visitenkarte (22) und
mit einer mit dem Visitenkarten-Datenspeicher in Informationsverbindung stehenden Anzeige (Anzeigendisplay 16, 35) zur optischen Wiedergabe von den im Visitenkarten-Datenspeicher gespeicherten Visitenkarten.

2. Organizer nach Anspruch 1, dadurch gekennzeichnet, daß die optische Abtasteinrichtung (15; 26) als Abtastzeile ausgebildet ist, quer zu der die abzutastende Visitenkarte (22) relativverschiebbar ist.

3. Organizer nach Anspruch 2, dadurch gekennzeichnet, daß der Organizer (10) einen Schlitten (13) aufweist, auf dem aufliegend die abzutastende Visitenkarte (22) an der optischen Abtasteinrichtung (15) vorbeibewegt wird.

4. Organizer nach Anspruch 1, dadurch gekennzeichnet, daß die optische Abtasteinrichtung (33) eine maximal 11,5 cm x maximal 8,5 cm, vorzugsweise eine maximal 10,0 cm x maximal 7,0 cm, große Abtastfläche aufweist.

5. Organizer nach einem der vorhergehenden Ansprüche, dadurch gekennzeichnet, daß der Organizer (20) Antriebsmittel (Transportrollen 24) aufweist, mittels denen die abzutastende Visitenkarte (22) zu oder vorbei an der optischen Abtasteinrichtung (26) bewegt wird.

6. Organizer nach einem der vorhergehenden Ansprüche, gekennzeichnet durch eine Bedienungseinrichtung (Trackball-Kugel 17), mittels der zumindest der optische Abtastungsablauf und/oder ein Informationsaustausch mit dem Visitenkarten-Datenspeicher steuerbar ist bzw. sind.

7. Organizer nach einem der vorhergehenden Ansprüche, gekennzeichnet durch eine mit dem Visitenkarten-Datenspeicher in Informationsverbindung stehende, von außen zugängliche Schnittstelle (18), über die Daten aus dem Visitenkarten-Datenspeicher auslesbar sind.

8. Organizer nach einem der vorhergehenden Ansprüche, dadurch gekennzeichnet, daß die im Visitenkarten-Datenspeicher gespeicherten Visitenkarten (22) auf der Anzeige durchblätterbar sind.

9. Organizer nach einem der vorhergehenden Ansprüche, dadurch gekennzeichnet, daß seine Außenabmessungen maximal 13,5 cm x maximal 10,5 cm, vorzugsweise maximal 12,0 cm x maximal 9,0 cm, betragen.
